Europäisches Patentamt

European Patent Office

Office européen des brevets

(19)

(11) Numéro de publication: **0 256 910**
**A1**

(12) **DEMANDE DE BREVET EUROPEEN**

(21) Numéro de dépôt: 87401701.5

(22) Date de dépôt: 21.07.87

(51) Int. Cl.⁴: **G 03 B 27/32**

(30) Priorité: 22.07.86 FR 8610637

(43) Date de publication de la demande:
24.02.88 Bulletin 88/08

(84) Etats contractants désignés:
AT BE CH DE ES GB GR IT LI LU NL SE

(71) Demandeur: **Tissot, Jacques**
**17, rue Philibert Guide**
**F-71100 Chalon-sur-Saone (FR)**

(72) Inventeur: **Tissot, Jacques**
**17, rue Philibert Guide**
**F-71100 Chalon-sur-Saone (FR)**

(74) Mandataire: **Bruder, Michel**
**Cabinet Michel Bruder 10, rue de la Pépinière**
**F-75008 Paris (FR)**

(54) **Banc de réproduction graphique portable.**

(57) La présente invention concerne un banc de reproduction graphique portable, léger, peu encombrant, reproduisant sur un support quelconque, en qualité TRAIT, un document opaque ou transparent au format, en réduction ou en agrandissement.

Ce banc est caractérisé en ce que le document originel et son image sont situés côte à côte dans un même plan de travail (4) fixe, un objectif (3) est monté sur une paroi (11) disposée sous ledit plan de travail (4), perpendiculairement à celui-ci, dans une zone sensiblement médiane (12), cette paroi (11) étanche à la lumière séparant deux compartiments (9,10), chaque compartiment contenant, à l'aplomb des découpes vitrées (5,6), un miroir plan (1,2), incliné de 45 degrés par rapport au plan de travail (4), les deux miroirs (1,2) formant de plus, entre leurs surfaces réfléchissantes, un angle de 90°.

*Fig. 4*

## Description

La présente invention concerne un banc de reproduction graphique portable, léger, peu encombrant reproduisant en qualité TRAIT tout document opaque ou transparent au format, en réduction ou en agrandissement.

Dans le domaine de la reproduction graphique, on trouve d'abord les dispositifs photocopieurs dont on connaît les limites : la qualité et la finesse de recopie d'une part, les taux d'agrandissement ou de réduction discontinus et limités, d'autre part.

Par aileurs, les systèmes photocopieurs ne permettent pas de visualiser le document reproduit avant le tirage, ce qui est incontestablement un avantage décisif en faveur des bancs de reproduction graphiques ; plus professionnels, les bancs utilisent du matériel sensible, films ou bromures de qualité LITH, c'est-à-dire à très haut contraste, sans gris intermédiaires, et sont généralement dotés d'optiques performantes, assurant aux reproductions la qualité "TRAIT", c'est à dire sans aucune déformation des traits quelqu'en soit leur sens.

Les bancs de reproduction sont, pour le reste, très proches du fonctionnement d'une caméra photographique, généralement de grande taille, comportant un plan objet, éclairé, face à un objectif, muni ou non d'un diaphragme pour tenir compte de la sensibilité du film, l'objectif se déplaçant, grâce à son soufflet, par rapport à l'objet pour effectuer une mise au point de son image restituée sur une plaque sensible.

On comprend donc qu'un banc de reproduction graphique met à profit tous les avantages qu'offre la caméra photographique : l'agrandissement et la réduction des objets se font de manière continue, en les visualisant avant de les tirer, quitte à reproduire leurs images, par transparence au moyen d'un crayon par exemple ; il est, enfin, possible d'obtenir une grande précision de reproduction grâce à des similis dont la trame peut atteindre trois cents points au mm².

On sait que les banc de reproduction se classent en deux grandes catégories selon que la prise de vue s'effectue horizontalement ou verticalement.

Concernant les bancs du type horizontal, ils sont toujours extrêmement encombrants, plus de quatre mètres de longueur tenant au format de travail (souvent A 3), et d'un poids de plusieurs centaines de kilogrammes. Ils sont aujourd'hui plus ou moins abandonnés au profit des bancs verticaux qui sont méanmoins très hauts et en tout cas très lourds.

Les bancs verticaux comprennent toujours, en partie inférieure, le document à reproduire autour duquel sont disposées, en débord, deux rampes d'éclairsage latérales. Dans la zone médiane se trouve l'objectif à déplacement vertical grâce à son soufflet et en partie haute, le support de reproduction susceptible de recevoir les plaques sensibles.

Les inconvénients qui ressortent de ces dispositifs sont nombreux :
- les documents à reproduire, proches du sol, sont d'accès et donc de manipulation difficiles et par leur situation, ils sont très exposés aux poussières et aux coups.
- les documents ont des épaisseurs variables par hypothèse ; ainsi la face à reproduire est-elle différente de la face sur laquelle ils reposent, ce qui occasionne des pertes de netteté à chaque mouvement du document,
- l'éclairage en débord du banc peut-être facilement heurté avec perte de netteté ici encore.
- les objectifs ne comprenent pas d'obturateurs, le tempe d'exposition est déterminé par le temps d'éclairage du document, ce qui conduit à placer les bancs en chambre noire avec ce que cela suppose d'espace mobilisé eu égard à la taille des appareils.
- le support de reproduction se situe à une hauteur telle qu'il est nécessaire de prévoir un marche-pied pour y accéder : ceci affaiblit considérablement les possibilités de "jouer" avec le document en le visualisant, puisque celui-ci n'est plus à portée de main, sauf à automatiser tous ses déplacements.

Il convenait donc de trouver une solution à ces problèmes par laquelle le document et sa reproduction soient sensiblement côte à côte et à hauteur de l'opérateur, présentant un encombrement et un poids considérablement réduits, pouvant fonctionner dans n'importe quel endroit, sans risque particulier de détérioration tout en conservant une extrême simplicité de manipulation.

La présente invention vise précisément à remédier aux inconvénients précités en procurant un banc de reproduction graphique portable, léger, peu encombrant, reproduisant sur un support quelconque en qualité TRAIT un document opaque ou transparant au format, en réduction ou en agrandissement, caractérisé en ce que le document originel et son image obtenue par transparence ou sur plaque sensible, film ou bromure, sont situés côte à côte dans un même plan de travail fixe, avantageusement horizontal, durant toute la reproduction, la formation de l'image du document sur le support de reproduction étant obtenue par un objectif, avantageusement muni d'un diaphragme , monté sur une paroi disposée sous ledit plan de travail , perpendiculairement à celui-ci, dans une zone sensiblement médiane et suivant toute une largeur dudit plan, cette paroi étanche à la lumière séparant deux compartiments totalement clos situés l'un sous le document et l'autre sous le support de reproduction, par l'intermédiaire de deux découpes vitrées pratiquées dans le plan de travail , chaque compartiment contenant, à l'aplomb desdites découpes, un miroir plan, incliné de 45 degrés par rapport au plan de travail , les deux miroirs formant de plus, entre leurs surfaces réfléchissantes, un angle de 90°, grâce à quoi les rayons obtenus par un éclairage adéquat du document à reproduire, disposé contre l'une desdites découpes sur laquelle il est maintenu, sont réfléchis sur le miroir en correspondance qui les renvoie perpendiculairement sur le second miroir au travers de l'objectif comportant des moyens de mise au point adaptés selon qu'il s'agit ou non d'un objectif à focale variable, le second miroir renvoyant à son tour perpendiculairement les rayons incidents sur la face du support de reproduction disposé à cet effet contre la deuxième découpe vitrée du plan de travail sur laquelle ledit support est maintenu.

Le banc ainsi caractérisé constitue un mode particulièrement intéressant de "pliage" des faisceaux lumineux entre le document à reproduire et son image en réduisant d'abord la longueur dudit banc et en offrant ensuite de nombreux avantages obtenus en combinaison avec les dispositions qui suivent :

L'objectif, placé dans le trajet des rayons lumineux entre les deux miroirs, suivant l'invention, peut-être soumis à deux types de mouvement : dans un déplacement horizontal de l'objectif suivant l'axe des rayons entre les deux miroirs, on sait que l'image du document à reproduire sera d'autant plus grande que l'objectif se rapprochera dudit document et ce, par simple application des propriétés des systèmes optiques convergents ; réciproquement le principe étant réversible, si l'objectif s'éloigne du document son image sera réduite. En revanche, on sait aussi en optique que si un objet est fixe et si l'on veut obtenir son image toujours dans le même plan fixe, on ne pourra obtenir une image nette que si, l'objectif se déplaçant suivant l'axe des rayons, on modifie le trajet lumineux pour recaler le document au foyer du système et obtenir ainsi sa mise au point.

Ceci est obtenu dans une première configuration du banc de reproduction graphique suivant l'invention en conjuguant le mouvement horizontal de l'objectif suivant l'axe lumineux entre les miroirs avec un mouvement vertical, vers le bas et proportionnel au mouvement horizontal, maintenant ainsi le document au foyer du système avec la conséquence d'une netteté constante.

Dans une seconde configuration du banc de reproduction graphique, on remplace la cinématique de la configuration précédente par un objectif sans déplacement mais à focale variable communément appelé ZOOM.

Dans une caractéristique particulière de l'invention, il n'est pas nécessaire, pour réaliser des reproductions dans de très larges proportions d'agrandissement ou de réduction, de prévoir un déplacement de l'objectif horizontal suivant l'axe lumineux allant d'un miroir à l'autre en passant par le centre où l'image est au format du document. En effet, ce déplacement horizontal et son mouvement vertical conjugué est limité au seul trajet entre la paroi centrale et, en position extrême, l'un ou l'autre des miroirs, considérant qu'ainsi on réalise de l'objet placé en regard du miroir face à l'objectif, une image grandissante depuis la reproduction au format, objectif au centre, jusqu'à un agrandissement dépendant des dimensions du banc de reproduction graphique , objectif proche dudit miroir. Naturellement, pour obtenir des réductions dans des proportions analogues, il suffit d'inverser d'une part le document et l'image, mettant le document sur l'autre découpe vitrée du plan de travail, et en inversant d'autre part l'éclairage qui doit, dans tous les cas, se focaliser sur le document ; dans la mesure où il est facile de réaliser deux compartiments étanches, à la lumière au-delà des déplacements de l'objectif nécessitant une fenêtre mobile dans la paroi de séparation centrale, on comprend dès lors l'extrème simplification et maniabilité d'un banc de reproduction graphique suivant l'invention.

Plusieurs types d'éclairage peuvent être disposés dans les banc de reproduction graphique conformes à l'invention.

Il peut s'agir d'abord d'un éclairage latéral de part et d'autre des miroirs. Cet éclairage est alors disposé à distance optimisée du document pour éviter toute brûlure tout en limitant la puissance d'éclairage ; il peut être alors nécessaire d'utiliser des miroirs dont la forme est adaptée susceptible de laisser passer le maximum de flux lumineux.

D'autres types d'éclairages sont possibles conformément à l'invention : dans le compartiment comportant l'objectif une rampe d'éclairage, montée au dessus de l'objectif et de son soufflet sur la paroi mobile, vient éclairer le document par réflexion des rayons lumineux dans le miroir en correspondance avec l'objet ; parallèlement, dant le compartiement sans objectif, on dispose un même type d'éclairage sur la paroi mobile et susceptible d'éclairer l'objet, quand il se trouve de ce côté-ci, par réflexion sur le miroir en correspondance.

D'autres éclairages conviennent à l'invention tels que les systèmes à balayage connus dans les photocopieurs, ou encore tout éclairage utilisant les techniques LASER.

En définitive, parmi toutes les configurations possibles du banc de reproduction graphique suivant l'invention il conviendra d'étudier le rapport qualité/prix ; on sait, par exemple, que les objectifs à focale variable sont aujourd'hui extrêmmement onéreux si l'on veut obtenir une qualité "trait" en reproduction, par rapport au dispositif à déplacements conjugués d'un objectif simple, permettant, de surcroît, de plus larges taux d'agrandissement ou de réduction que les objectifs à focale variable du type ZOOM.

On comprendra mieux l'invention grâce à la description détaillée d'une forme particulière et préférée du banc de reproduction graphique, sans qu'elle soit limitative, donnée ci-après à titre d'illustration de l'invention en référence aux dessins annexés dans lesquels,

Les figures 1a, 1b, 1c, 1d et 1e, représentent schématiquement les cinq étapes du "pliage" des rayons lumineux dans le banc de reproduction graphique suivant l'invention.

Les figures 2a, et 2b sont des schémas représentant, en position relative, le document (D), son image (I) et l'obectif selon qu'on procéde à un agrandissement du document (D), figure 2a, ou à une réduction de ce document (D), figure 2b.

La figure 3 est une vue en perspective du banc de reproduction graphique.

La figure 4 est une vue en perspective de l'équipage mobile, objectif-miroirs, interne au banc de reproduction graphique.

La figure 5 est une vue en coupe verticale longitudinale du banc de reproduction graphique montrant le trajet des rayons lumineux issus du plan objet jusqu'au plan image dans une position centrale de l'obectif permettant une reproduction au format.

La figure 6 est une vue en coupe verticale schématique identique à la précédente dans laquelle l'objectif est en position extrême donnant un agrandissement ou une réduction maximale selon que l'objet est à gauche ou à droite sur le plan de travail.

La figure 7 est une vue en coupe verticale et transversale du banc de reproduction graphique, limitée au miroir et au dispositif d'éclairage, montrant leur position relative.

La figure 8 est une vue en coupe verticale et longitudinale d'un compartiment du banc de reproduction graphique suivant l'invention, montrant le dispositif d'éclairage en situation faciale.

- les figures 9 et 10 sont des vues schématiques respectivement en coupe verticale et en perspective d'un éclairage central focalisé sur le document par réflexion sur le miroir en correspondance.

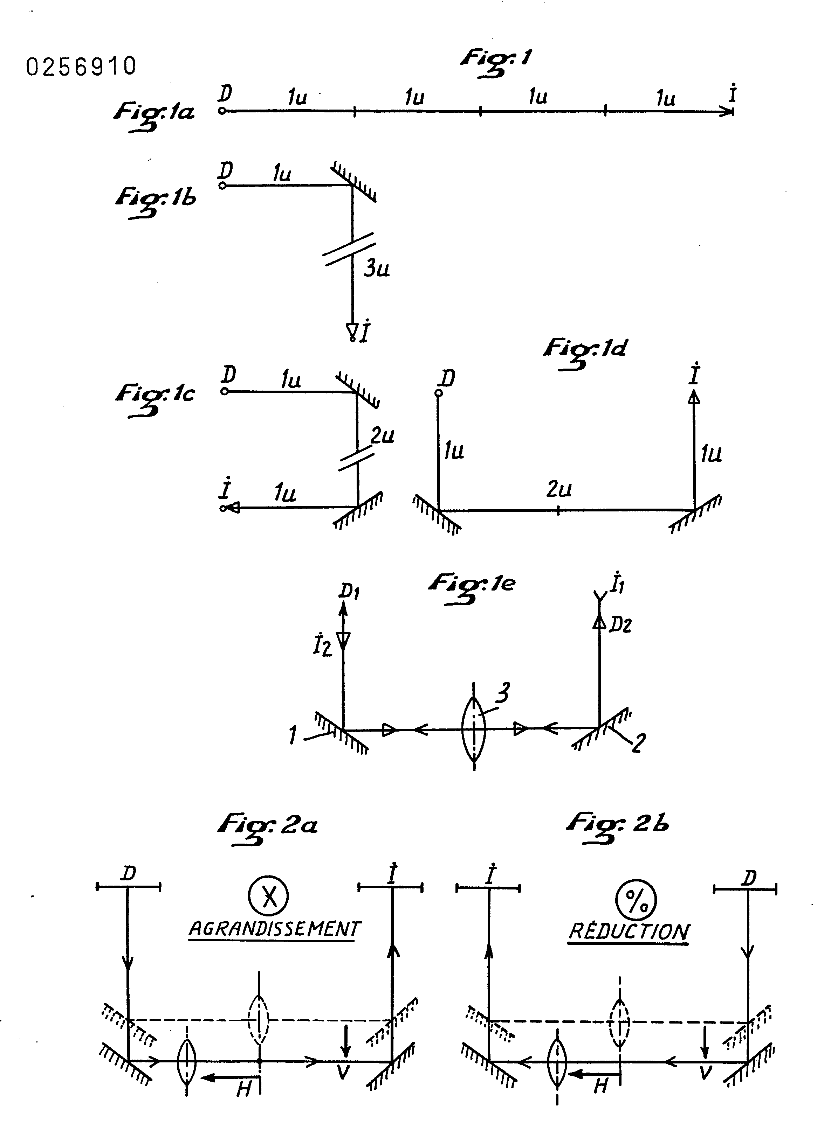

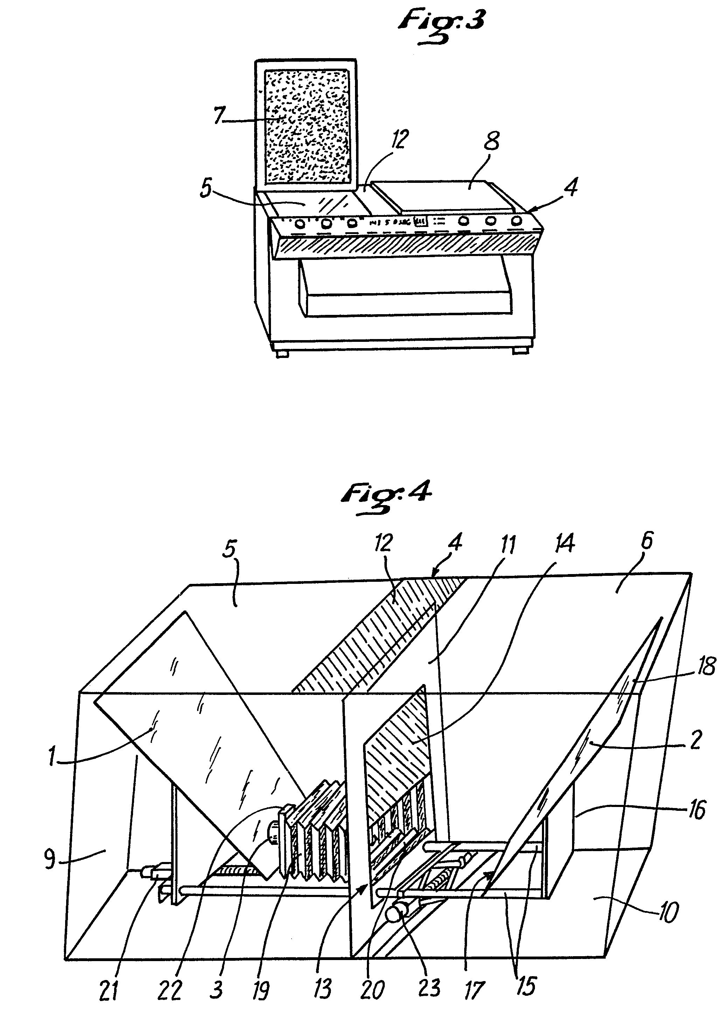

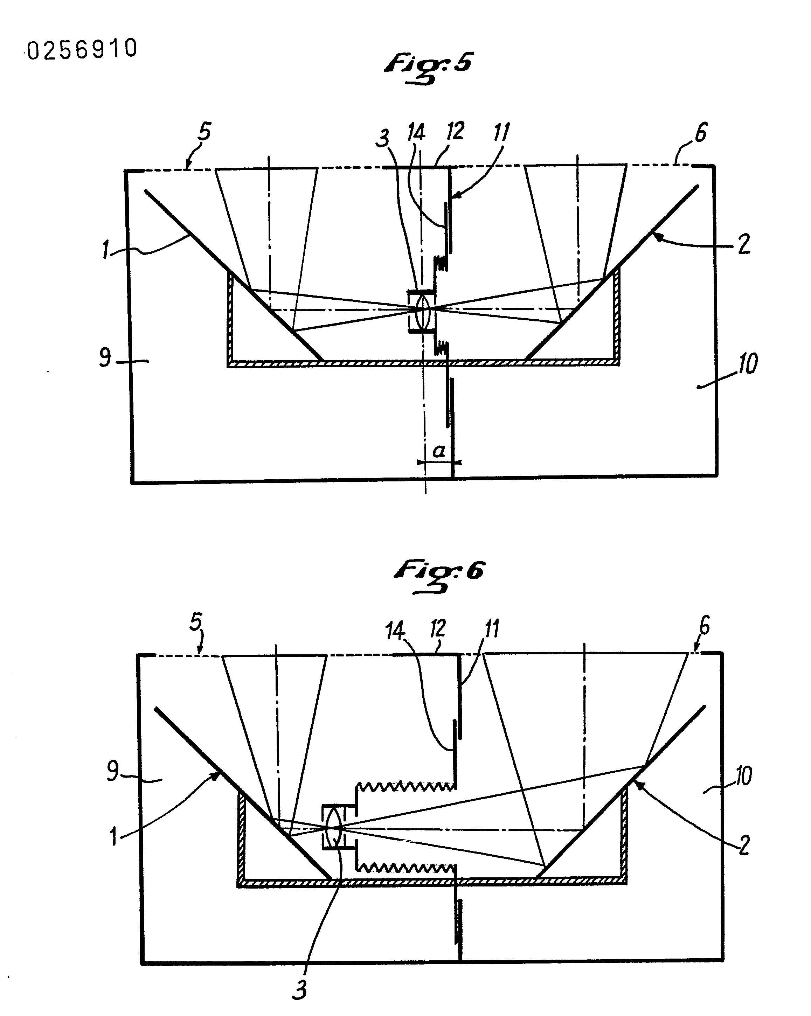

Conformément aux figures 1a à 1e, le banc de reproduction graphique suivant l'invention effectue un double pliage du faisceau lumineux issu d'un document pour donner son image : à partir du faisceau rectiligne d'un classique banc horizontal tel que schématisé en figure 1a, deux miroirs 1 et 2 disposés à 45° des rayons incidents et formant entre leurs faces réfléchissantes un angle de 90°, permettent d'obtenir dans le même plan du document (D) et une image (I) de ce document (D), comme il est montré sur les figures 1c et 1d, pour autant qu'un objectif 3 soit intercalé entre les miroirs 1 et 2 (fig. 1e). C'est d'ailleurs grâce à un déplacement horizontal conjugué à un déplacement vertical de ce même objectif 3 qu'on détermine toutes les combinaisons d'agrandissement ou de réduction du document comme il a été décrit ci-dessus et qu'on a schématisé sur les figures 2a et 2b ; on retrouve ceci, en pratique, dans le banc de reproduction graphique conforme aux figures 3 et 4 présentant un plan de travail 4 horizontal et fixe dans lequel sont pratiquées deux découpes vitrées 5 et 6 contre lesquelles on dispose indifféremment le document à reproduire (D) ou le support de reproduction (I) qui peut-être un film, un bromure ou tout simplement une feuille avantageusement opacifiée permettant une reproduction par transparence susceptible de recopie au crayon par exemple. Le document (D) et le support de reproduction (I) sont maintenus, face à reproduire ou à impressionner contre les vitres 5 et 6, ce qui exclut tout décalage focal dû à l'épaisseur du document ou du support, grâce à de classique dos à dépression 7 et 8. Intérieurement le banc de reproduction graphique suivant l'invention comporte un système optique conforme à la figure 4.

Sous le plan de travail 4, deux compartiments 9 et 10 clos et étanches à la lumière sont séparés par une paroi centrale il s'étendant transversalement et verticalement sur toute la longueur du plan de travail 4 depuis une zone centrale 12 dudit plan de travail 4 jusqu'au fond des compartiments 9 et 10.

Cette paroi de séparation 11 entre compartiments est munie d'une fenêtre 13 dans laquelle se déplace verticalement une paroi mobile 14. Le déplacement de cette paroi mobile 14 s'effectue dans des glissières verticales munies de joints, en feutre par exemple, coopérant avec des joints horizontaux flottants ou du type soufflet, pour assurer une complète étanchéité à la lumière entre les deux compartiments. Fixés à la paroi mobile 14 deux supports de miroir 15 du type rail ou glissière ou équivalent s'étendent dans un plan horizontal et perpendiculaire à la paroi de séparation 11, et de part et d'autre de ladite paroi 11.

Dans le compartiment droit 10, et juste au droit de la découpe vitrée 6 du plan de travail 4 est disposé un miroir 2 en forme de trapèze régulier, avec sa face réfléchissante tournée vers la paroi centrale 11, et inclinée d'un angle de 45° par rapport à elle, la grande base 18 du trapèze étant en haut et sa petite base 17 étant la plus proche de la paroi centrale 11, en appui sur les deux rails 15, un support 16 venant soutenir le miroir 2 pour le rendre solidaire des deux rails 15.

Dans le compartiment gauche 9, en symétrie par rapport à la paroi 11, et au droit de la découpe vitrée 5 du plan de travail 4, est logé un autre miroir 1 identique au premier et également incliné de 45° par rapport à la paroi 11, face réfléchissante tournée vers cette même paroi 11, en sorte que les deux faces réfléchissantes des miroirs 1 et 2 fassent entre elles un angle exact de 90°. Le miroir 1 est solidaire des rails 15 de la même manière que le miroir 2. Dans ce compartiment 9, l'objectif 3 peut se mouvoir horizontalement grâce d'une part à un soufflet classique 19 dont la fenêtre 20 est fixée sur la paroi mobile 14 et d'autre part, à un coulisseau de maintien de l'objectif 3, pouvant se déplacer horizontalement sur les rails 15 au moyen d'une vis sans fin 21 située entre les deux rails 15 auxquels elle est fixée. Cette vis 21 peut être motorisée ou commandée manuellement. D'autre part, l'objectif 3 est avantageusement muni d'un diaphragme 22 permettant d'utiliser le banc de reproduction graphique avec toute sorte de sensibilité pour le support de reproduction.

L'ensemble constitué des miroirs 1, 2, de l'objectif 3 avec les accessoires précédemment décrits et de la paroi mobile 14, peut se déplacer verticalement grâce aux coulisses latérales prévues de part et d'autre de la paroi de séparation 11, au moyen d'un dispositif du type pantographe 23 en appui sur le fond du compartiment 10 et sur les deux rails 15. Le pantographe 23 peut être actionné manuellement ou motorisé de sorte qu'un couplage électrique puisse être réalisé entre les deux mouvements horizontaux et verticaux suivant les flèches H et V sur les figures 2a et 2b.

Il n'est pas souhaitable qu'un couplage mécanique vienne remplacer l'éventuel couplage électrique précédent dans la mesure où il peut être recherché un décalage volontaire du foyer pour obtenir certains flous techniques (pour éliminer la trame d'un document par exemple).

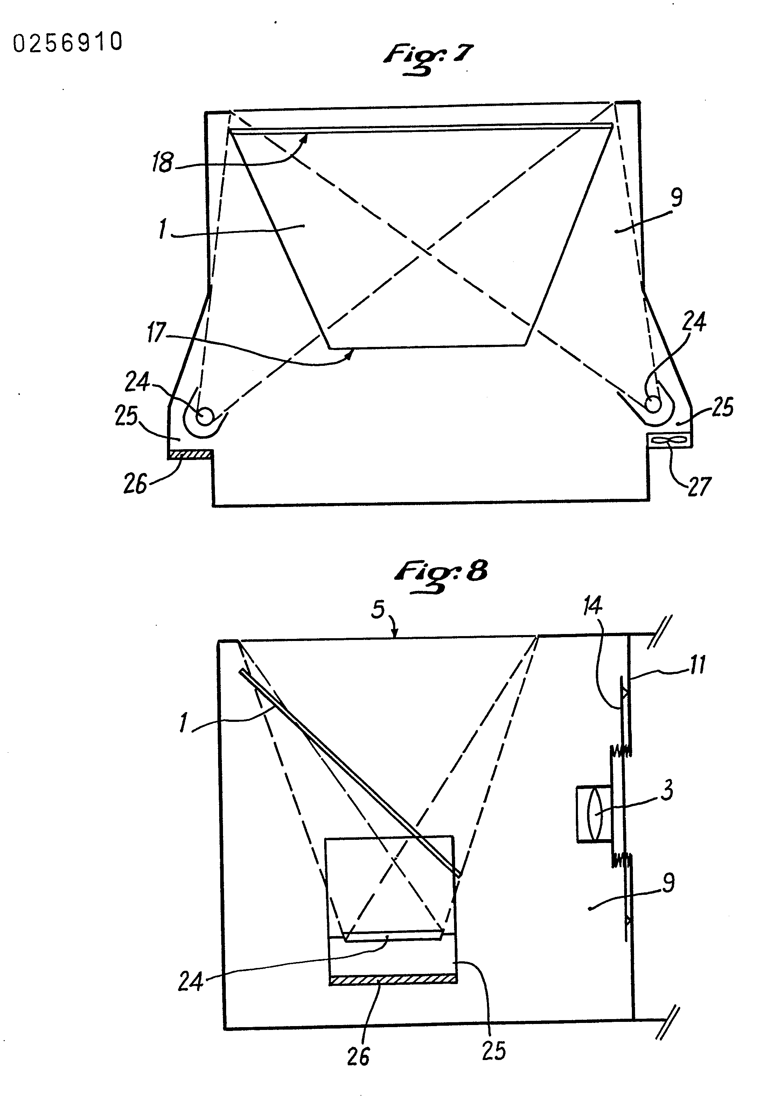

Dans la mode de réalisation préféré et non limitatif du banc de reproduction graphique suivant l'invention, quelconque dispositions particulières sont essentielles au bon fonctionnement de l'ensemble : Les figures 5 et 6 donnent une représentation des rayons tels qu'ils transitent d'un document à l'autre en passant par l'objectif 3 :

- la figure 5 représente un schéma simplifié des divers éléments constituant le système optique dans leur implantation relative, et pour une position centrale de l'objectif 3 telle que la reproduction du document soit au format de celui-ci. Compte tenu de la nécessaire épaisseur de l'objectif et des accessoires le supportant, pour que le centre optique dudit objectif 3 se trouve dans le plan médiateur ou banc de reproduction graphique, il faur décaler parallèlement à elle-même la paroi de séparation centrale 11 vers le compartiment 10 d'une valeur équivalente (a).

- les miroirs 1 et 2 sont par ailleurs aluminés sur leurs faces avant afin d'éviter les problèmes de réfraction habituellement observés dans les miroirs classiques lesquels sont dus à l'épaisseur de la vitre sur le miroir. Naturellement, les miroirs 1 et 2 pourraient, sans sortir de l'invention être remplacés par un support de forme équivalente et présentant une face avant réfléchissante tel qu'une feuille métallique polie par exemple.

- les vitres 5 et 6 du plan de travail sont avantageusement traitées antireflet sur leur face interne aux compartiments 9 et 10, évitant toute déperdition lumineuse.

- la figure 6, représentant le système optique en position extrême dans ses déplacements horizontaux (vers la gauche) et verticaux (vers le bas), donne un aperçu des capacités du banc de reproduction graphique pour effectuer des agrandissements ou des réductions suivant que le document se situe sur la vitre 5 ou 6.

Il ressort de manière évidente que les taux d'agrandissement et de réduction ne sont en fait limités que par la géométrie, et par là, la taille même du banc de reproduction graphique. Comme on l'a vu ci-dessus, le banc de re production graphique suivant l'invention utilise les propriétés de réversibilité totale de la lumière, chacun des compartiments 9,10 pouvant ainsi recevoir sur la vitre 5,6 le document à reproduire qu'il convient d'éclairer correctement par un dispositif qu'il faut impérativement aménager dans chaque compartiment, en se rappelant que l'allumage de l'un implique obligatoirement l'extinction de l'autre.

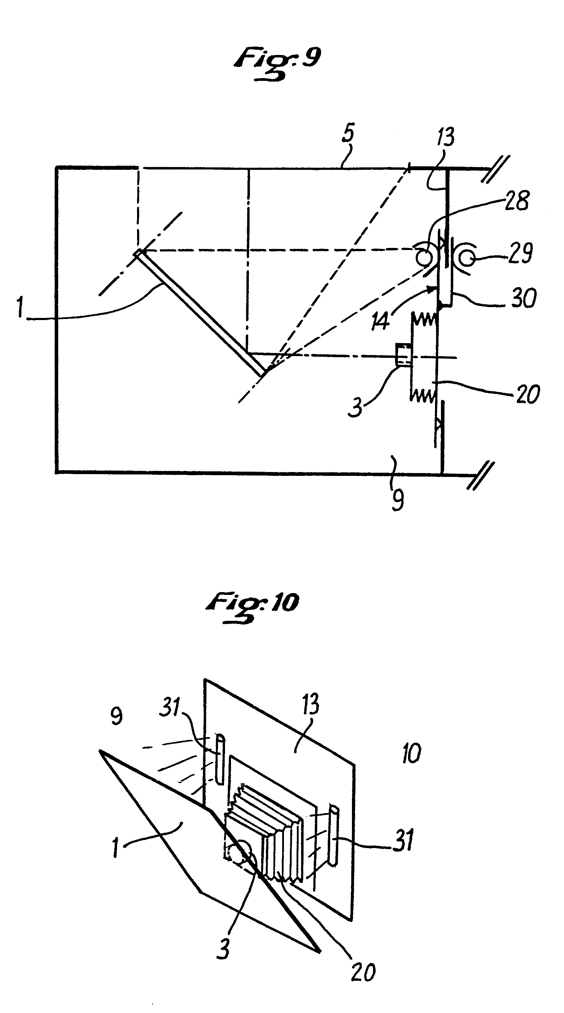

Conformément aux figures 7 et 8, l'éclairage est produit par deux rampes de lampes à quartz du type halogène 24, ou équivalent, disposées de par et d'autre des miroirs 1 et 2 dans chaque compartiment, sur les faces avant et arrière du banc. On sait que ces rampes 24 doivent être à bonne distance du document à reproduire ce qui conduit à les monter dans des boîtiers débordants 25 à l'intérieur des compartiments. Ainsi écartées du document, les lampes 24 ont, en outre, une incidence lumineuse évitant toute réflexion parasitaire sur les supports vitrés.

Ainsi qu'il est représenté de côté et de face sur les figures 7 et 8, l'éclairage du plan objet 5 ne peut être maximal que si le miroir 1 en correspondance est en forme de trapèze régulier, grande base 18 en haut. Naturellement le miroir 2 du compartiment 10 est de forme identique au miroir 1 pour les raisons plusieurs fois détaillées ci-dessus.

Il est enfin intéressant d'observer que les boîtiers 25 sont, en outre, avantageusement utilisés pour l'aération des compartiments au travers d'un filtre 26 servant d'entrée d'air disposé dans l'un des boîtiers 25, l'air étant expulsé par un motoventilateur 27 disposé dans le boîtier 25 lui faisant face.

Dans une variante d'exécution conforme aux figures 9 et 10 le système d'éclairage de chacun des compartiments 9 et 10 du banc est constitué d'une unique rampe d'éclairage du même type que précédemment, disposée face au miroir 1 dans le compartiment 9 et face au miroir 2 dans le compartiment 10.

Dans cette configuration, l'éclairage du plan objet 5 (ou 6) s'effectue par réflexion sur le miroir 1 ou 2, ceux-ci étant dans ce cas taillés en forme regtangulaire, les raisons d'une forme plus complexe ayant disparu.

Deux rampes 28 et 29 sont montées dans les compartiments 9 et 10 sur la partie mobile 14 de la paroi de séparation centrale 11 du banc de reproduction graphique. Dans le compartiment 9 la rampe 28 est directement fixée au-dessus de l'objectif 3, tandis que dans le compartiment 10 la rampe 29 est mise en place symétriquement à la rampe 28 par rapport à la paroi 11, au moyen d'une béquille 30 arrimée à la paroi mobile 14, prise au dessus de la fenêtre 20 du soufflet de l'objectif 3, pour ne pas entraver le mouvement vertical de l'équipage mobile : miroirs - objectif -éclairage.

En variante de l'éclairage qui vient d'être décrit, d'autres combinaisons sont possibles et entrent dans le cadre de l'invention :

- les rampes d'éclairage 28 et 29 conformément à la figure 9 peuvent être disposées juste sous le plan de travail de part et d'autre de la paroi fixe 13 avec l'heureuse conséquence d'un éclairage dans ombre portée due à l'objectif 3 ainsi qu'une nette diminution de la réflexion parasitaire sur les surfaces vitrées. En revanche, il se pose un problème de refroidissement du plan de travail et il convient de protéger le document.

- on peut également envisager un éclairage face aux miroirs suivant la figure 10, mais dont les lampes 31 sont montées verticalement de chaque côté du soufflet 20 de l'objectif ; on notera que les lampes doivent être écartées le plus possible pour éviter les ombres portées.

- on peut également concevoir des éclairages mixtes latéral et/ou facial qui peuvent d'ailleurs être différents d'un compartiment à l'autre.

Le banc de reproduction graphique, conforme aux descriptions qui viennent d'être données, présente de façon subsidiaire quelques avantages complémentaires par rapport aux bancs classiques tenant d'abord à son carénage qui permet une protection de l'objectif de des parties mobiles en les mettant à l'abri d'un contact direct.

L'éclairage étant intérieur, les boîtes de film ouvertes, malencontreusement oubliées dans la chambre noire, ne risquent pas d'être voilées par l'éclairage d'exposition, à condition de recouvrir (ou rabattre le dos) la partie vitrée comportant le document à reproduire.

Concernant le nettoyage, celui-ci est limité au plan de travail, la partie intérieure du banc faisant l'objet d'un simple dépoussiérage espacé dans le temps.

D'autres avantages indirects pourraient être énumérés tenant en particulier à la géométrie réduite du banc de reproduction graphique facilitant entre autres les déplacements.

La description qui vient d'être faite d'un dispositif particulier de l'invention n'est pas limitative et tout autre solution concernant, par exemple, les entraînement horizontaux et verticaux, ou les supports de miroirs voire même les éclairages entrerait pleinement dans le cadre de la présente invention.

Le banc de reproduction graphique suivant l'invention est particulièrement bien adapté pour tirer des fragments de documents afin de réaliser des montages de précision, qui, repris par le même banc, fourniront le document technique destiné à l'impression ou à la présentation finale. L'utilisation du banc de reproduction graphique s'étend dans difficulté au tracé des circuits imprimés, à la réalisation de plans pour architects, aux divers travaux dans le dessin industriel, etc...

**Revendications**

1.- Banc de reproduction graphique portable, léger, peu encombrant, reprioduisant sur un support quelconque, en qualité TRAIT, au format, en réduction ou en agrandissement, un document opaque ou transparent dont l'image est obtenue par transparence ou sur plaque sensible, film ou bromure, le document et l'image étant disposés côte à côte sur le même plan de travail fixe et horizontal, caractérisé en ce que la formation de l'image du document sur le support de reproduction est obtenue par un objectif (3), avantageusement muni d'un diaphragme (22), susceptible de déplacements verticaux et longitudinaux, et attaché à une paroi verticale et opaque (11) au moyen d'un soufflet (19), ladite paroi (11), disposée sous ledit plan de travail (4), perpendiculairement à celui-ci, dans une zone sensiblement médiane (12) de manière à occuper toute la largeur dudit plan (4), sépare deux compartiments (9,10), totalement étanches à la lumière, situés l'un sous le document et l'autre sous le support de reproduction, par l'intermédiaire de deux découpes vitrées (5,6), pratiquées dans le plan de travail (4), chaque compartiment pouvant alors recevoir, à l'aplomb desdites découpes, un miroir plan (1,2), incliné de 45 degrés par rapport au plan de travail (4), les deux miroirs (1,2), formant de plus, entre leurs surfaces réfléchissantes, un angle de (90°), et pouvant avoir ensemble un déplacement vertical par des moyens adaptés grâce à quoi les rayons obtenus par un éclairage adéquat du document à reproduire, disposé contre l'une desdites découpes (5) ou (6), sur laquelle ledit document à reproduire est maintenu, sont réfléchis sur le premier miroir (1) ou (2), en correspondance, qui les renvoie perpendiculairement sur le second miroir (2) ou (1), au travers de l'objectif (3) correctement déplacé pour ce faire, et comportant des moyens de mise au point adaptés, selon qu'il s'agit ou non d'un objectif à focale variable, le second miroir (2) ou (1) renvoyant à son tour perpendiculairement les rayons incidents sur la face du support de reproduction disposé à cet effet contre la deuxième découpe vitrée (6) ou (5) du plan de travaile (4) sur laquelle ledit support est maintenu.

2. Banc de reproduction graphique suivant la revendication 1 caractérisé en ce que la mise au point et le taux de grandissement étant obtenus par un double déplacement de l'objectif (3), horizontalement suivant l'axe des rayons lumineux entre les deux miroirs (1,2) et verticalement par déplacement de l'ensemble miroirs-objectifs, l'objectif (3) pouvant être déplacé horizontalement, à l'intérieur d'un seul compartiment (9), par des moyens d'entraînement linéaires (21), asservis ou non, depuis la paroi centrale de séparation (11) à laquelle il reste relié par le soufflet (19) jusqu'à une position extrême en butée sur le miroir (1), l'ensemble des deux miroirs (1,2), de l'objectif (3) et de son soufflet (19) relié à la paroi centrale (11) peut être déplacé verticalement entre des positions extrêmes comprises entre le fond des compartiments et le plan fixe de travail (4), suivant des moyens de coulissement verticaux étanches à la lumière.

0256910

Fig.1

Fig.1a

Fig.1b

Fig.1c

Fig.1d

Fig.1e

Fig.2a

Fig.2b

AGRANDISSEMENT

RÉDUCTION

0256910

*Fig. 3*

*Fig. 4*

0256910

Fig.5

Fig.6

0256910

Fig. 7

Fig. 8

0256910

**Fig. 9**

**Fig. 10**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-2 391 044 (B.F. TERRY)<br>* Pages 1-4; figures 1-4 * | 1,2 | G 03 B 27/32 |
| Y | US-A-4 066 357 (Y. MORI)<br>* Colonnes 2,3; figures 1-5 * | 1 | |
| Y | US-A-2 940 358 (J.F. ROSENTHAL)<br>* Colonnes 4-6; figures 1-5 * | 1,2 | |
| Y | FR-A-1 161 305 (E. DELMAS)<br>* Pages 1,2; figures 1-5 * | 1 | |

-----

DOMAINES TECHNIQUES
RECHERCHES (Int. Cl.4)

G 03 B 27/32

Le présent rapport de recherche a été établi pour toutes les revendications

| Lieu de la recherche | Date d'achèvement de la recherche | Examinateur |
|---|---|---|
| LA HAYE | 10-11-1987 | BOEYKENS J.W. |